# EUROPÄISCHE PATENTSCHRIFT

(11) **EP 1 351 796 B1**
(45) Veröffentlichungstag und Bekanntmachung des Hinweises auf die Patenterteilung: **03.11.2010**
(21) Anmeldenummer: 02711774.6
(22) Anmeldetag: 14.01.2002
(51) Int. Cl.: B23P 11/02, B21D 53/84, F16H 53/02, F01L 1/047

(54) **VERFAHREN ZUR HERSTELLUNG EINER GEBAUTEN WELLE**
METHOD OF MANUFACTURING AN ASSEMBLED SHAFT
PROCÉDÉ DE FABRICATION D'UN ARBRE ASSEMBLÉ

(30) Priorität: 15.01.2001 DE 10101539
(43) Veröffentlichungstag der Anmeldung: 15.10.2003
(73) Patentinhaber: Neumayer Tekfor Holding GmbH, 77756 Hausach (DE)
(72) Erfinder: VOGEL, Manfred, 77876 Kappelrodeck (DE)
(74) Vertreter: von Puttkamer, Nikolaus
(86) Internationale Anmeldenummer: PCT/DE2002/000083
(87) Internationale Veröffentlichungsnummer: WO 2002/055257

(56) Entgegenhaltungen:
- DE-A- 3 301 749
- GB-A- 896 899
- GB-A- 954 773
- US-A- 4 211 192
- US-A- 4 680 844
- US-A- 5 299 881
- PATENT ABSTRACTS OF JAPAN vol. 1996, no. 08, 30. August 1996 (1996-08-30) & JP 08 093884 A (NIPPON PISTON RING CO LTD), 12. April 1996 (1996-04-12)

## Beschreibung

Die Erfindung betrifft ein Verfahren zur Herstellung einer gebauten Welle nach dem Oberbegriff des Patentanspruches 1. Insbesondere betrifft die Erfindung ein Verfahren zur Herstellung von gebauten Nockenwellen.

Um Nocken oder andere Bauelemente auf einer Nockenwelle, die hohl ausgebildet ist, langzeitstabil zu befestigen, ist es bekannt, vorgefertigte Nocken bzw. Bauelemente auf die Nockenwelle aufzuschieben und diese örtlich hydraulisch aufzuweiten, so dass die Nocken bzw. Bauelemente drehfest fixiert werden. Das örtlich begrenzte Aufweiten der Nockenwelle ist relativ kompliziert, da hierzu spezielle Vorkehrungen (spezielle Sonden, Abdichtungen etc.) verwendet werden müssen.

Aus der US-PS 5,299,881 ist eine gebaute Nockenwelle bekannt, bei der die einzelnen Nocken und die entsprechende Nockenwelle zunächst in getrennten Herstellungsschritten fertig hergestellt werden und danach die Nocken mit einer speziellen Fügetechnik auf die Nockenwelle so aufgeschoben werden, dass zwischen der Welle und den Nocken eine spielfreie Passung besteht. Die vorgefertigten Nocken weisen jeweils eine Innenbohrung und wenigstens zwei axial voneinander beabstandete ringförmige Zonen auf, die durch wenigstens einen freien Raum voneinander getrennt sind, der sich in der Innenbohrung der Nocken befindet. Der Raum und die Zonen sind symmetrisch zur Mittelebene der Nocken angeordnet. Zur Herstellung der gebauten Nockenwelle werden die einzelnen Nocken auf die Nockenwelle aufgeschoben, so dass sich zwischen den genannten Zonen und dem Umfang der Welle jeweils eine Passung ergibt. Ein Problem besteht dabei darin, dass das Aufschieben der genannten Nocken relativ schwierig und problematisch ist, insbesondere dann, wenn die Nocken auf oder über die Bereiche geschoben werden, auf denen sie fixiert werden sollen. Zudem sind die Nocken relativ kompliziert aufgebaut und daher nur mit vergleichweise hohen Kosten herstellbar.

Aus der US 4 680 844 geht ein Verfahren zur Herstellung einer gebauten Welle hervor, wobei auf der Welle wenigstens ein Bauelement aufgebracht wird, wobei die Welle in eine Öffnung des Bauelementes eingeführt wird, wobei die Welle vor dem Aufbringen des Bauelementes mit der Hilfe einer Streck- und Spanneinrichtung derart gestreckt wird, dass ein ursprünglicher Durchmesser im Bereich wenigstens eines Befestigungsortes auf einen Durchmesser reduziert wird, wobei danach das Bauelement auf die Welle aufgeschoben und zum Befestigungsort auf der Welle verschoben wird, und wobei danach die Streck- und Spanneinrichtung wieder entlastet wird, wobei sich der Durchmesser der Welle wieder in Richtung auf den ursprünglichen Durchmesser vergrößert.

Die Aufgabe der vorliegenden Erfindung besteht darin ein Verfahren zur Herstellung einer gebauten Welle zu schaffen, bei dem die Befestigung wenigstens eines Bauelementes, insbesondere einer Nackenwelle, auf der Welle relativ einfach und kostengünstig erfolgen kann.

Diese Aufgabe wird durch ein Verfahren zur Herstellung einer gebauter Welle mit den Merkmalen des Patentanspruches 1 gelöst.

Der wesentliche Vorteil der vorliegenden Erfindung besteht darin, dass aufwendige hydraulische Aufweitoperationen einer hohlen Welle, insbesondere einer Nockenwelle, wie sie beim Stand der Technik erforderlich sind, nicht ausgeführt werden müssen, weil der Durchmesser der Welle vor dem Aufschieben der Nocken bzw. anderer Bauelemente durch Strecken elastisch soweit verringert wird, dass ein Aufschieben der genannten Nocken bzw. Bauelemente ohne weiteres möglich ist. Vorteilhafterweise müssen bei der Ausführung des erfindungsgemäßen Verfahrens auch an den Nocken bzw. Bauelementen selbst keine aufwendigen Veränderungen vorgenommen werden.

Im folgenden werden die Erfindung und deren Ausgestaltungen im Zusammenhang mit den Figuren näher erläutert. Es zeigen:
- Figur 1: in schematischer Darstellung eine Nockenwelle sowie eine auf dieser zu befestigende Nocke;
- Figur 2: einen Verfahrensschritt, bei dem der Durchmesser der Nockenwelle durch Strecken elastisch verrin- gert ist;
- Figur 3: eine auf der Nockenwelle befestigte Nocke, und
- Figur 4: eine Weiterbildung der Erfindung.

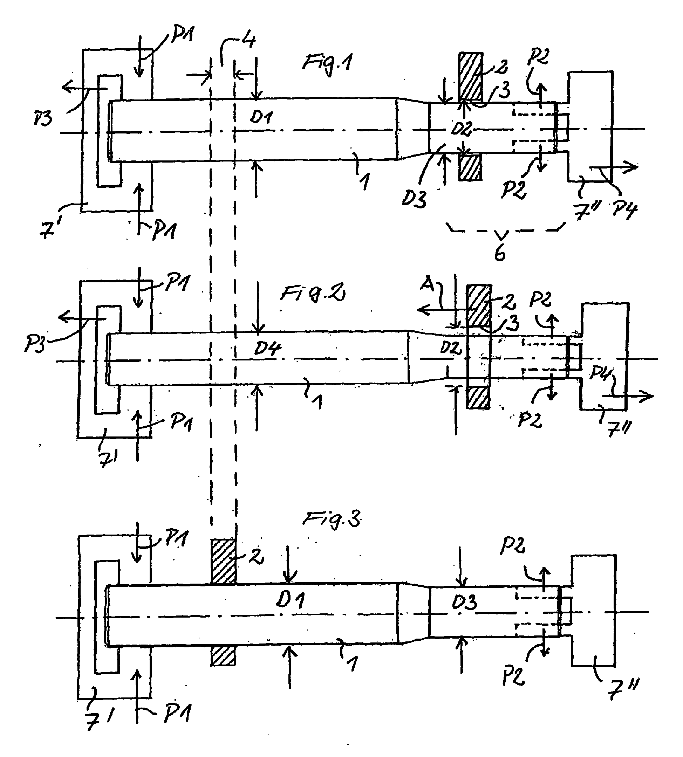

In der Figur 1 ist eine vorzugsweise als Hohlwelle ausgebildete Welle, insbesondere eine Nockenwelle, mit 1 bezeichnet. Bei einem auf der Nockenwelle 1 aufzubringenden Bauelement handelt es sich beispielsweise um eine Nocke 2. Die Nocke 2 weist eine Innenöffnung 3 auf, in die zur Befestigung der Nocke 2 auf der Nockenwelle 1 die Nockenwelle 1 in der nachfolgend beschriebenen Weise eingeschoben wird. Die Nockenwelle 1 besitzt zumindest an dem Befestigungsort 4, an dem die Nocke 2 zu befestigen ist, einen Außendurchmesser D1. Der Innendurchmesser der Innenöffnung 3 der Nocke 2 ist mit D2 bezeichnet.

An einem Endbereich der Nockenwelle 1 befindet sich ein sogenannter Einfädelbereich 6, der einen Außendurchmesser D3 aufweist, der vorzugsweise kleiner als der Durchmesser D2 und auch kleiner als der Durchmesser D1 ist, sodass die Nocke 2 oder auch weitere Nocken bzw. Bauelemente dort mit Spiel aufgeschoben bzw. bereits eingefädelt sein können.

In einem Verfahrensschritt werden vorzugsweise die Endbereiche der Nockenwelle 1 in einer Streck- und Spanneinrichtung 7', 7" befestigt. Diese Streck- und Spanneinrichtung 7', 7" ist vorzugsweise gemäß Figur 1 so beschaffen, dass sie mit einem Spannelement 7' am Außenumfang der Nockenwelle 1 angreift und auf die Nockenwelle 1 eine Spannkraft P1 ausübt. Mit ihrem anderen Spannelement 7" greift die Streck- und Spanneinrichtung 7', 7" am Innenumfang der hohlen Nockenwelle 1 an, wobei sie vorzugsweise in radialer Richtung eine Spannkraft P2 auf die Nockenwelle 1 ausübt. Vor dem Ansetzen des Spannelementes 7" werden die an der Nockenwelle 1 zu befestigenden Nocken 2 und/oder andere Bauelemente auf den Einfädelbereich 6 aufgeschoben.

Besonders bevorzugt weist die Nockenwelle 1 an ihrer dem Spannelement 7" zugewandten Seite ein Innengewinde auf, in das ein Außengewinde des Spannelementes 7" einschraubbar ist.

Es wird darauf hingewiesen, dass auch das Spannelement 7' entsprechend dem Spannelement 7" ausgebildet sein kann.

Nachfolgend wird die Streck- und Spanneinrichtung 7', 7" so betätigt, dass ein Zug auf die eingespannte Nockenwelle 1 ausgeübt wird, sodass sich der Durchmesser D1 der Nockenwelle 1 auf einen Durchmesser D4 verringert. Es gilt: D1 > D4 > D3, wie dies die Figur 2 zeigt. Die Spannelemente 7' und 7" üben dabei die mit P3 und P4 bezeichneten Streckkräfte aus.

Um bei der Betätigung der Streck- und Spanneinrichtung 7', 7" und beim Strecken der Nockenwelle 1 die genannte Reduzierung des Durchmessers D1 auf den Durchmesser D4 zu ermöglichen, besteht die Nockenwelle 1 aus einem Material, vorzugsweise einer speziellen Stahllegierung, die für die genannte Durchmesserreduzierung eine elastische axiale Dehnung der Nockenwelle 1 durch die Streck- und Spanneinrichtung 7', 7" ermöglicht. Neben der elastischen Verformung ist auch eine plastische Verformung der Nockenwelle beim Strecken möglich.

Gemäß Figur 2 wird die Nocke 2 dann aus dem Einfädelbereich 6 auf die gestreckte Nockenwelle 1 mit dem Durchmesser D4 aufgeschoben und zum Befestigungsort 4 in der richtung A verschoben.

Die Nocke 2 wird am Befestigungsort 4 durch nicht näher dargestellte Halteeinrichtungen in Bezug auf Verschiebungen in der axialen Richtung und in der Umfangsrichtung fixiert.

Erfindungsgemäss ist der Durchmesser D4 größer als der Durchmesser D2, sofern sichergestellt ist, dass die Nocke 2 dann nach der Streckoperation mit Kraft zum Befestigungsort 4 verschoben werden kann.

Wenn die Streck- und Spanneinrichtung 7', 7" gemäß Figur 3 entlastet bzw. freigegeben wird, kehrt die Nockenwelle 1 infolge der Entlastung und ihrer Elastizität in Richtung auf ihre in der Figur 1 dargestellte ursprüngliche Lage zurück, wobei sich ihr Außendurchmesser D4 wieder in Richtung auf den Außendurchmesser D1 vergrößert. Dabei wird die Nocke 2 am Befestigungsort 4 dauerhaft sowohl axial, wie auch drehfest durch einen Presssitz fixiert. Die Streck- und Spanneinrichtung kann dann entfernt werden.

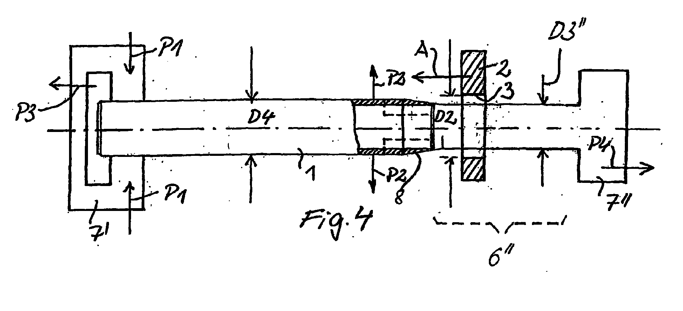

Gemäß Figur 4 ist es auch denkbar, einen Einfädelbereich 6" anstelle auf der Nockenwelle 1 (Figuren 1 bis 3) an einem Spannelemente 7", das am Innenumfang der Nockenwelle 1 angreift, oder an zwei solchen Spannelementen vorzusehen. In diesem Fall werden die auf die Nockenwelle 1 aufzubringenden Bauelemente bzw. Nocken 2 vor dem Ansetzen des Spannelementes 7" auf dem Einfädelbereich 6" angeordnet, dessen Durchmesser vorzugsweise kleiner ist als der Innendurchmesser der Innenöffnung 3 der Bauelemente bzw. Nocken 2. Nach dem Strecken werden dann die Bauelemente bzw. Nocken 2 auf die Nockenwelle 1 aufgeschoben und in die vorgegebenen Positionen gebracht.

Um das Aufschieben vom Einfädelbereich 6" auf die Nockenwelle 1 zu ermöglichen, weist diese vorzugsweise eine Auffahrschräge 8 auf, die einen Übergang vom Durchmesser D3" des Einfädelbereiches 6" zum Durchmesser D4 der gestreckten Nockenwelle 1 bildet.

Es wird darauf hingewiesen, dass es auch denkbar ist, eine Welle 1 zu verwenden, die nur im Breich des Befestigungsortes oder der Befestigungsorte 4 den ursprünglichen Durchmesser D1 aufweist, der beim Strecken auf den Durchmesser D4 reduziert wird. Die anderen Wellenbereiche weisen dann einen Durchmesser auf, der kleiner als D1 ist. Diese Wellenbereiche werden beim Strecken ebenfalls reduziert.

## Patentansprüche

1. Verfahren zur Herstellung einer gebauten Welle, wobei auf der Welle (1) wenigstens ein Bauelement (2), insbesondere auf eine Nockenwelle eine Nocke, aufgebracht wird, wobei die Welle (1) in eine Öffnung (3) des Bauelementes (1) eingeführt wird, wobei die Welle (1) vor dem Aufbringen des Bauelementes (2) mit der Hilfe einer Streck- und Spanneinrichtung (7', 7") derart gestreckt wird, dass ein ursprünglicher Durchmesser (D1) im Bereich wenigstens eines Befestigungsortes (4) auf einen Durchmesser (D4) reduziert wird, wobei danach das Bauelement (2) auf die Welle (1) aufgeschoben und zum Befestigungsort (4) auf der Welle (1) verschoben wird, und wobei danach die Streck- und Spanneinrichtung (7', 7") wieder entlastet wird, wobei sich der Durchmesser der Welle (1) wieder in Richtung auf den ursprünglichen Durchmesser (D1) vergrößert, und das Bauelement (2) am Befestigungsort (4) dauerhaft sowohl axila, wie auch drehfest, durch einen Presssitz befestige wird, **dadurch gekennzeichnet, dass** die Welle (1) durch die Streck- und Spanneinrichtung (7', 7") auf einen Durchmesser (D4) reduziert wird, der geringfügig größer ist als der Innendurchmesser (D2) der Öffnung (3) des Bauelementes (2) und dass das Bauelement (2) mit Krafteinwirkung auf der Welle (1) zum Befestigungsort (4) verschoben wird.

2. Verfahren nach Anspruch 1, **dadurch gekennzeichnet, dass** die Welle (1) an einem Randbereich einen Einfädelbereich (6) aufweist, in dem wenigstens ein Bauelement (2) angeordnet wird und dass nach dem Strecken der Welle (1) durch die Streck- und Spanneinrichtung (7', 7") das Bauelement (2) aus dem Einfädelbereich (6) auf die gestreckte Welle (1) geschoben und auf der gestreckten Welle (1) zum Befestigungsort (4) verschoben wird.

3. Verfahren nach Anspruch 1 oder 2, **dadurch gekennzeichnet, dass** die Streck- und Spanneinrichtung (7', 7") wenigstens ein Spannelement (7") aufweist, das am Innenumfang einer wenigstens teilweise hohl ausgebildeten Welle (1) angreift.

4. Verfahren nach Anspruch 3, **dadurch gekennzeichnet, dass** das am Innenumfang der Welle (1) angreifende Spannelement (7") einen Einfädelbereich (6") aufweist, auf dem wenigstens ein Bauelement (2) angeordnet wird und dass das Bauteil (2) nach dem Strecken der Welle (1) aus dem Einfädelbereich (6") des Spannelementes (7") auf die Welle (1) geschoben und auf der Welle (1) zu dem Befestigungsort (4) verschoben wird.

5. Verfahren nach einem der Ansprüche 1 bis 4, **dadurch gekennzeichnet, dass** eine Streck- und Spanneinrichtung (7', 7") verwendet wird, die ein am Außenumfang der Welle (1) angreifendes Spannelement (7') und ein am Innenumfang einer wenigstens teilweise hohl ausgebildeten Welle (1) angreifendes Spannelement (7") aufweist.

6. Verfahren nach einem der Ansprüche 1 bis 5, **dadurch gekennzeichnet, dass** eine Streck- und Spanneinrichtung (7', 7") verwendet wird, die zwei am Innenumfang einer wenigstens teilweise hohl ausgebildeten Welle (1) angreifende Spannelemente (7") aufweist.

7. Verfahren nach einem der Ansprüche 1 bis 6, **dadurch gekennzeichnet, dass das am Innenumfang der Welle (1) angreifende** Spannelement (7") der Streck- und Spanneinrichtung (7', 7") einen Bereich mit einem Außengewinde aufweist, das in einem Innengewinde verschraubt wird, das in dem Innenumfang einer wenigstens teilweise hohl ausgebildeten Welle (1) angeordnet ist.

8. Verfahren nach einem der Ansprüche 1 bis 7, **dadurch gekennzeichnet, dass** der dem Einfädelbereich (6") des am Innenumfang der Welle (1) angreifenden Spannelementes (7") zugewandte Bereich der Welle (1) eine Auffahrschräge (8) für das Bauelement (2) aufweist.

9. Verfahren nach einem der Ansprüche 1 bis 8, **dadurch gekennzeichnet, dass** die Welle (1) eine Vollwelle ist.

10. Verfahren nach einem der Ansprüche 1 bis 9, **dadurch gekennzeichnet, dass** die Welle (1) eine Hohlwelle ist.

11. Verfahren nach einem der Ansprüche 1 bis 10, **dadurch gekennzeichnet, dass** zum Verschieben des Bauelementes (2) auf der Welle (1) in den Bereich zwischen dem Bauelement (2) und der Welle (1) ein Schmiermittel zugeführt wird.

12. Verfahren nach einem der Ansprüche 1 bis 11, **dadurch gekennzeichnet, dass** eine Welle (1) verwendet wird, die im wesentlichen entlang ihrer gesamten Länge den ursprünglichen Durchmesser (D1) aufweist.

13. Verfahren nach einem der Anspüche 1 bis 11, **dadurch gekennzeichnet, dass** eine Welle (1) verwendet wird, die den ursprünglichen Durchmesser (D1) im wesentlichen nur im Bereich ihres wenigstens einen Befestigungsortes (4) besitzt und in den anderen Wellenbereichen einen Durchmesser aufweist, der kleiner als der ursprüngliche Durchmesser (D1) ist.

## Claims

1. A method of manufacturing a worked shaft, whereby at least one component (2) is placed on the shaft (1), in particular a cam being placed on a camshaft, whereby the shaft (1) is introduced into an opening (3) in the component (1), whereby, before mounting the component (2), the shaft (1) is stretched with the help of a stretching and chucking device (7,7") such that an original diameter (D1) in the area of at least one mounting site (4) is reduced to a diameter (D4); then the component (2) is pushed onto the shaft (1) and is shifted to the mounting site (4) on the shaft (1) and next
the stretching and chucking device (7,7") is released again, whereupon the diameter of the shaft (1) enlarges again in the direction of the original diameter (D1) and the component (2) is durably fixed axially as well as torque proof at the mounting site (4) by means of a press fit, **characterized in that** the shaft (1) is reduced by the stretching and chucking device (7', 7") to a diameter (D4) which is slightly larger than the inside diameter (D2) of the opening (3) of the component (2), and the component (2) is displaced to the mounting site (4) with a force acting on the shaft (1).

2. Method according to claim 1, **characterized in that** the shaft (1) has in an edge area a threading area (6) in which at least one component (2) is situated, and after stretching the shaft (1) by the stretching and chucking device (7', 7"), the component (2) is pushed out of the threading area (6) and
onto the stretched shaft (1) and then is shifted to the mounting site (4) on the stretched shaft (1).

3. Method according to claim 1 or 2, **characterized in that** the stretching and chucking device (7¹, 7") has at least one chucking element (7") which acts on the inside circumference of a shaft (1) which is desigaed to be at least partially hollow.

4. Method according to claim 3, **characterized in that** the chucking element (7") which acts on the inside circumference of the shaft (1) has a threading area (6") on which is arranged at least one component (2), and the component (2) is pushed out of the threading area (6") of the chucking element (7") and onto the shaft (1) after the stretching of the shaft (1) and then is shifted on the shaft (1) to the mounting site (4).

5. Method according to one of claims 1 through 4, **characterized in that** a stretching and chucking device (7', 7") is used, having a chucking element (7') which acts on the outside circumference of the shaft (1) and a chucking element (7") which acts on the inside circumference of a shaft (1) that is designed to be at least partially hollow.

6. Method according to one of claims 1 through 5, **characterized in that** a stretching and chucking device (7', 7") which has two chucking elements (7") acting on the inside circumference of a shaft (1) which is designed to be at least partially hollow is used.

7. Method according to one of claims 1 through 6, **characterized in that** the chucking element (7") of the stretching and chucking device (7', 7") acting on the inside circumference of the shaft (1) has an area with an outside thread which is screwed onto an inside thread situated in the inside circumference of a shaft (1) which is designed to be at least partially hollow.

8. Method according to one of claims 1 through 7,**characterized in that** the area of the shaft (1) facing the threading area (6") of the chucking element (7") acting on the inside circumference of the shaft (1) has an approach ramp (8) for the component (2).

9. Method according to one of Claims 1 through 8, **characterized in that** the shaft (1) is a solid shaft.

10. Method according to one of claims 1 through 9, **characterized in that** the shaft (1) is a hollow shaft.

11. Method according to one of claims 1 through 10, **characterized in that** a lubricant is supplied for shifting the component (2) on the shaft (1) into Ine area between the component (2) and the shaft (1).

12. Method according to one of claims 1 through 11, **characterized in that** a shaft having the original diameter (D1) essentially along its total length is used.

13. Method according to one of claims 1 through 11, **characterized in that** a shaft having the original diameter (D1) essentially only in the area of its at least one mounting site (4) and having a diameter smaller than the original diameter (D1) in the other areas of the shaft is used.

## Revendications

1. Procédure pour la fabrication d'un arbre construit, l'arbre (1) comportant au moins un élément de structure (2), notamment une came sur un arbre à cames, l'arbre (1) étant inséré dans un orifice (3) de l'élément de structure (2), l'arbre étant étiré avant la mise en place de l'élément de structure (2) au moyen d'un dispositif d'allongement et de serrage (7', 7") de façon que le diamètre d'origine (D1) dans la zone d'au moins un point de fixation (4) est réduit à un diamètre (D4), l'élément de structure (2) étant alors glissé sur l'arbre (1) et déplacé sur le point de fixation (4) sur l'arbre (1), et le dispositif d'allongement et de serrage (7', 7") étant ensuite libéré de la contrainte, le diamètre de l'arbre (1) augmentant de nouveau vers le diamètre d'origine (D1) et fixe l'élément de structure (2) sur le point de fixation (4) de manière durable tant dans le sens axial que dans le sens radial par un ajustement sans jeu, **caractérisée par le fait que** l'arbre (1) est réduit par le dispositif d'allongement et de serrage (7', 7") à un diamètre (D4) légèrement plus important que le diamètre intérieur (D2) de l'orifice (3) de l'élément de structure (2) et que l'élément de structure (2) est déplacé de force sur l'arbre (1) jusqu'au point de fixation (4).

2. Procédure selon la revendication 1, **caractérisée par le fait que** l'arbre (1) possède dans une zone périphérique une zone d'insertion (6) dans laquelle au moins un élément de structure (2) est disposé que qu'après l'allongement de l'arbre (1) par le dispositif d'allongement et de serrage (7', 7") l'élément de structure (2) est glissé à partir de la zone d'insertion (6) sur l'arbre (1) allongé vers le point de fixation (4).

3. Procédure selon la revendication 1 ou 2, **caractérisée par le fait que** le dispositif d'allongement et de serrage (7', 7") comporte au moins un élément de serrage (7") qui est fixé au niveau du diamètre intérieur d'un arbre (1) au moins partiellement creux.

4. Procédure selon la revendication 3, **caractérisée par le fait que** l'élément de serrage (7") fixé sur le diamètre intérieur de l'arbre (1) présente une zone d'insertion (6") sur laquelle est disposé au moins un élément de structure (2) et que l'élément de structure (2) est glissé sur l'arbre (1) après l'allongement de l'arbre (1) à partir de la zone d'insertion (6") de l'élément de serrage (7") et est déplacé sur l'arbre (1) jusqu'au point de fixation (4).

5. Procédure selon l'une des revendications 1 à 4, **caractérisée par le fait qu'**un dispositif d'allongement et de serrage (7', 7") est utilisé, qui comporte un élément de serrage (7') fixé au niveau du diamètre extérieur de l'arbre (1) et un élément de serrage (7") fixé au niveau du diamètre intérieur d'un arbre (1) au moins partiellement creux.

6. Procédure selon l'une des revendications 1 à 5, **caractérisée par le fait qu'**un dispositif d'allongement et de serrage (7', 7") est utilisé, qui comporte deux éléments de serrage (7") fixés au niveau du diamètre intérieur d'un arbre (1) au moins partiellement creux.

7. Procédure selon l'une des revendications 1 à 6, **caractérisée par le fait que** l'élément de serrage (7") fixé au niveau du diamètre intérieur de l'arbre (1) du dispositif d'allongement et de serrage (7', 7") présente une zone avec un filetage extérieur, qui est vissé sur un filetage intérieur disposé dans le diamètre intérieur d'un arbre (1) au moins partiellement creux.

8. Procédure selon l'une des revendications 1 à 7, **caractérisée par le fait que** la zone de l'arbre (1) orienté vers la zone d'insertion (6") de l'élément de serrage (7") fixé au niveau du diamètre intérieur de l'arbre (1) présente un chanfrein d'insertion (8) pour l'élément de structure (2).

9. Procédure selon l'une des revendications 1 à 8, **caractérisée par le fait que** l'arbre (1) est un arbre plein.

10. Procédure selon l'une des revendications 1 à 9, **caractérisée par le fait que** l'arbre (1) est un arbre creux.

11. Procédure selon l'une des revendications 1 à 10, **caractérisée par le fait que** pour déplacer l'élément de structure (2) sur l'arbre (1) un lubrifiant est appliqué sur la zone entre l'élément de structure (2) et l'arbre (1).

12. Procédure selon l'une des revendications 1 à 11, **caractérisée par le fait qu'**un arbre (1) est utilisé, qui présente pour l'essentiel sur toute sa longueur le diamètre d'origine (D1).

13. Procédure selon l'une des revendications 1 à 11, **caractérisée par le fait qu'**un arbre est utilisé, qui possède le diamètre d'origine (D1) pour l'essentiel uniquement dans la zone de son point de fixation (4) minimal et présente dans les autres zones de l'arbre un diamètre inférieur au diamètre d'origine (D1).
